# EUROPEAN PATENT SPECIFICATION

(11) **EP 4 347 290 B1**
(45) Date of publication and mention of the grant of the patent: **06.08.2025**
(21) Application number: 22728311.6
(22) Date of filing: 01.06.2022
(51) Int. Cl.: B60K 1/00, B60K 1/04, B62D 21/11, B60K 5/12

(54) **PRE-ASSEMBLED ELECTRIC POWER MODULE**
VORMONTIERTES ELEKTRISCHES LEISTUNGSMODUL
MODULE D'ALIMENTATION ÉLECTRIQUE PRÉ-ASSEMBLÉ

(30) Priority: 01.06.2021 NL 2028364
(43) Date of publication of application: 10.04.2024
(73) Proprietor: DAF Trucks N.V., 5643 TW Eindhoven (NL)
(72) Inventor: DINGEMANS, Cornelis Petrus Adrianus, 5643 TW Eindhoven (NL); WEIJENBORG, Bernardus Johannes Maria, 5643 TW Eindhoven (NL); GOESSEN, Nick Elisabeth Pierre, 5643 TW Eindhoven (NL); COPPEN, Thijs Henricus Josephus, 5643 TW Eindhoven (NL)
(74) Representative: V.O.
(86) International application number: PCT/NL2022/050301
(87) International publication number: WO 2022/255870

(56) References cited:
- WO-A1-2018/123337
- CN-A- 109 249 793
- DE-A1- 102010 007 414
- DE-A1- 102011 081 836
- DE-A1- 102017 004 132
- US-A- 1 678 033
- US-A1- 2016 226 041
- US-A1- 2019 263 449
- US-A1- 2020 094 669

## Description

### FIELD OF THE INVENTION

The invention relates to an electric power module for providing drive power in an electric drive train of a truck.

### BACKGROUND OF THE INVENTION

To reduce the environmental impact of trucks, especially for trucks larger than 6 tons gross vehicle weight, electrification of the drive train is a development area that is of rising interest. Trucks driven by an electric drive train can provide advantages, such as zero emission by the vehicle and reduced operational costs.

Therefore, these trucks are typically designed with a dedicated architecture to mount e.g. one or more electric motors, battery packs and/or fuel cells on board of the vehicle in a way that provides sufficient power and range under normal operating conditions. For example, US1678033 describes a mounting arrangement for mounting a battery unit in an electrically driven motor vehicle. To optimally benefit from the unique properties and advantages of these components relative to those of a conventional drive train, the architecture of a truck driven by an electric drive train typically may deviate significantly from an architecture of a truck driven by an internal combustion engine.

For example, an electric drive train may not require many gears as in a conventional drive train, since the torque-speed characteristic of an electric motor can be different from that of an internal combustion engine, and an electric drive train may not even require a similar mechanical power transmission. As such, an electric drive train may not need as many moving parts as a conventional power train, which further reduces the operational costs due to decreased friction and wear, and which provides additional space and weight budget e.g. to carry battery packs, to increase the range of the truck.

A disadvantage of having a dedicated architecture, however, is that, especially during a transition period in which different versions of trucks are in use, interchangeability of components and systems between different types of trucks becomes difficult, which reduces maintainability and quality management, and it is difficult to upgrade trucks from a conventional power train driven by an internal combustion engine to a zero-emission power train driven by an electric motor.

It is a challenge to design an architecture for an electric power train in a truck that is interchangeably suitable for a drive train driven by an internal combustion engine and a drive train driven by an electric motor, in a way that the benefits of either type of drive train can be exploited.

Furthermore, when converting a truck from a power train driven by an internal combustion engine to a drive train driven by an electric motor, it is a challenge to design an architecture that facilitates conversion, e.g. by interchanging the power module as a unit and without substantially changing the dynamic properties of the truck.

It is an object of the present invention to further advance the field of electric drive trains to address these and other challenges.

### SUMMARY OF THE INVENTION

In summary, the invention concerns an electric power module for providing drive power to an electric drive train in a truck. The electric power module comprises an auxiliary frame to be mounted to a chassis having a pair of longitudinal chassis members extending between a front axle and a rear axle of the truck. The auxiliary frame comprises a front section arranged for mounting an electric power source unit and a rear section arranged for mounting at least one auxiliary unit. The front section of the auxiliary frame comprises module mounts arranged for suspending the electric power module to the chassis between the pair of longitudinal chassis members near the front axle of the truck. The rear section of the auxiliary frame extends beyond the front section in a cantilevered fashion and comprises shock absorbers arranged for absorbing a pitch movement of the auxiliary frame relative to the chassis behind the module mounts.

In this way, an electric power module is provided with an auxiliary frame such that it can be mounted as a unit in the engine compartment of a truck, just as a conventional engine unit, e.g. by making use of conventional chassis mounts of an internal combustion engine in a conventional truck architecture, to convert the truck from having a power train driven by an internal combustion engine to having an electric power train, without substantially changing the dynamic behavior of the truck. In particular, due to the mass distribution made possible by the auxiliary frame mounting this electric power module may provide the driver with a similar sense of driving comfort. Also, other components and properties of the conventional truck architecture may remain substantially unchanged as well, which facilitates production, maintenance and quality management.

### BRIEF DESCRIPTION OF THE DRAWINGS

The invention will be further elucidated in the figures:
FIG 1 provides a schematic representation of a first embodiment of an electric power module 100 for providing drive power in a truck;
FIG 2 provides a side view of another or further embodiment of electric power module 100;
FIG 3 illustrates an isometric top view of electric power module and its rear suspension;
FIG 4 illustrates an isometric top view of yet another or further embodiment of electric power module 100;
FIG 5 provides an isometric view of another or further embodiment of electric power module 100;
FIG 6 illustrates a hoisting apparatus 1000 for hoisting electric power module 100 according to any embodiment of the present invention comprising an electric motor;
FIG 7 illustrates another or further embodiment of hoisting apparatus 1000;
FIG 8 illustrates a truck 1, provided with drive power by electric power module 100.

### DETAILED DESCRIPTION

Aspects of the invention pertain to an electric power module for providing drive power in a truck, comprising an auxiliary frame to be mounted to a chassis having a pair of longitudinal chassis members extending between a front axle and a rear axle of the truck, said auxiliary frame comprising a front section arranged for mounting an electric power source unit and a rear section arranged for mounting at least one auxiliary unit comprising at least a power electronics unit. The front section of the auxiliary frame comprises module mounts arranged for suspending the electric power module to the chassis between the pair of longitudinal chassis members near the front axle of the truck, and the rear section of the auxiliary frame extends beyond the front section in a cantilevered fashion and comprises shock absorbers arranged for absorbing a pitch movement of the auxiliary frame relative to the chassis behind the module mounts. The benefit of the invention is that it provides an electric power module that is interchangeable with a powertrain driven by an internal combustion engine in a conventional truck architecture, without changing the dynamic properties of the truck. While the auxiliary unit serves to compactify and efficiently pack further functional parts of the power module, so that the module can be installed as a single unit in the truck, many functional parts may be located elsewhere without departing from the scope of the claims. However, the auxiliary unit combines a number of components so that their weights may be combined and contribute by supporting it close to the front axle in particular, to improve driver comfort, which is for a large part influenced by providing mass (Tilger effect) to the front axle. The electric power module can be provided with a coolant system and an electric power system, and many components in the unit are provided that contribute to any or both these systems and are arranged so that they can be efficiently reached from above or underside for maintenance reasons.

In preferred embodiments, the electric power module further comprises an electric motor to be mounted beyond the rear section of the auxiliary frame and arranged for driving rear wheels of the truck, to form a combined power unit for converting a conventional truck to a truck driven by an electric power train.

In some further embodiments, the electric motor is electrically coupled to the electric power module, but mechanically decoupled from it, to avoid drive torque of the electric motor mechanically affecting the electric power module.

In some yet further embodiments, the electric motor comprises motor mounts for suspending the electric motor to the chassis between the pair of longitudinal chassis members, to mechanically couple the electric motor to the chassis similar to a transmission unit of a conventional power train driven by an internal combustion engine.

In some yet further embodiments, a centerline of a drive shaft of the electric motor is suspended parallel to the pair of longitudinal chassis members, to connect to a driven rear axle of a conventional truck.

In some yet further embodiments, the electric motor is mounted between the pair of longitudinal chassis members to a chassis cross member, wherein the chassis cross member laterally extends between and beyond the pair of longitudinal chassis members and comprises distal ends arranged for suspending auxiliary electric power source units, to have a single support structure for suspending the electric motor and auxiliary electric power source units.

In some embodiments, the at least one auxiliary unit comprises a power junction unit, to distribute electric power within the electric power module. This power junction unit distributes high voltage electrical energy to the electric motor and is preferably provided with conductive high voltage leads that span a short path between the electric power module, which may be a battery stack; and the electric motor, or at least an invertor unit that receives the high voltage leads.

In other or further embodiments, the at least one auxiliary unit comprises a fuse unit, to electrically protect the electric power module.

In some further embodiments, the fuse unit is accessible from a top side of the truck, and the fuse unit can be removably mounted to the auxiliary frame by a tilting movement of the fuse unit, to facilitate maintainability and serviceability of the electric power module.

In some embodiments, the auxiliary frame comprises a bottom section arranged for removably mounting at least one further auxiliary unit to the auxiliary frame, to further facilitate maintainability and serviceability of the electric power module.

In further embodiments, the at least one further auxiliary unit can be removably mounted to the auxiliary frame from a bottom side of the truck, to enhance accessibility of the electric power module.

In some embodiments, the at least one further auxiliary unit comprises a coolant system unit, to further enhance accessibility and/or maintainability and serviceability of the electric power module.

In some embodiments, the electric power source unit comprises a battery pack, to store electric power, e.g. for powering an electric motor.

Other aspects of the invention pertain to a hoisting apparatus for hoisting embodiments of the electric power module comprising an electric motor into a chassis of a truck. The hoisting apparatus comprises a first hoisting section, comprising a frame yoke including frame brackets arranged for coupling to the auxiliary frame of the electric power module, and a second hoisting section, comprising motor brackets arranged for coupling the electric motor to the auxiliary frame. The first hoisting section is arranged for hoisting the second hoisting section, to hoist the electric power module and the electric motor as a combined power unit into a chassis of a truck.

Another aspect of the invention pertains to a truck, provided with drive power by the electric power module according to any of the described embodiments.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

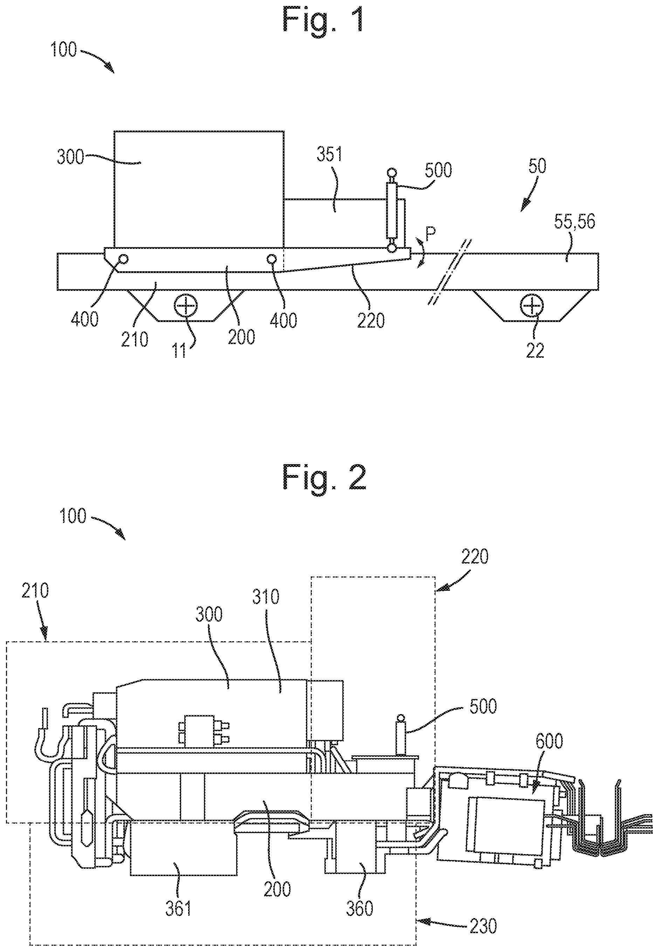

Turning to FIG 1, there is shown a schematic representation of an electric power module 100 for providing drive power in a truck, e.g. a box truck or a tractor comprising a fifth wheel for pulling a trailer. Electric power module 100 comprises an auxiliary frame 200 to be mounted to a chassis 50. Preferably chassis 50 is an unchanged chassis of a conventional truck architecture, for example a chassis that is also suitable for a truck driven by an internal combustion engine, or, alternatively, chassis 50 can be part of a conventional truck without all combustion engine related parts. Chassis 50 comprises a pair of longitudinal chassis members 55, 56 extending between a front axle 11 and a rear axle 22 of the truck.

As can be seen in FIG 1, auxiliary frame 200 comprises a front section 210 arranged for mounting an electric power source unit 300 and a rear section 220 arranged for mounting at least a power electronics unit 351, as an auxiliary unit of electric power module 100. Besides power electronics unit 351, rear section 220 can be arranged for mounting an invertor unit, or other types of auxiliary units, such as a fuse box, a power junction box, or an on-board charger, an E-Power take off, brake resistor, battery conditioning unit, AC compressor, 24V dynamo, invertor for a pump, E-air compressor, or the like. In some embodiments the auxiliary frame combines a high temperature circuit that includes a brake resistor and a heat exchanger for the truck cabin; a mid temperature circuit that includes a DC/DC Converter and E-Power take off; and a low temperature circuit; including cooling unit and a steering pump. Front section 210 of auxiliary frame 200 comprises module mounts 400 arranged for suspending electric power module 100 to chassis 50. Preferably, module mounts 400 match with, or correspond within acceptable deviations, the original mounting locations on chassis 50 for mounting an internal combustion engine, such that the structural topology of chassis 50 can remain unchanged.

Electric power module 100 is suspended to chassis 50 between the pair of longitudinal chassis members 55, 56 near front axle 11 of the truck, e.g. such that a center of gravity of electric power module 100 is substantially aligned above front axle 11. In this way, the weight distribution of a truck provided with drive power by electric power module 100 can be matched to the original weight distribution in a conventional truck powered by an internal combustion engine, such that the dynamic behavior of both trucks is similar. As a result, e.g. components and structural properties related to the truck's chassis, suspension system, brake system, vehicle control system and other aspects can be interchangeable between conventional trucks and trucks driven by electric power module 100. Preferably, the total mass of electric power module 100 suspended near front axle 11 in a truck powered by electric power module 100 is matched with the total mass of an internal combustion engine and corresponding power transmission in a conventional truck, e.g. such that the eigenfrequency of the corresponding mass-damper system formed at the front of both trucks is similar, to have an unchanged comfort level for a driver of a truck powered by electric power module 100 relative to a conventional truck.

Rear section 220 of auxiliary frame 200 extends beyond front section 210 in a cantilevered fashion, without using additional mounts for mounting to chassis 50. As can be seen in FIG 1, module mounts 400 are arranged on front section 210 to substantially suspend the relatively large mass of electric power source 300, while the relatively small mass of auxiliary unit 351 is suspended by rear section 220 being cantilevered to front section 210. This solution provides an optimized balance between maximum strength and minimum total mass of auxiliary frame 200, and thus maximum payload.

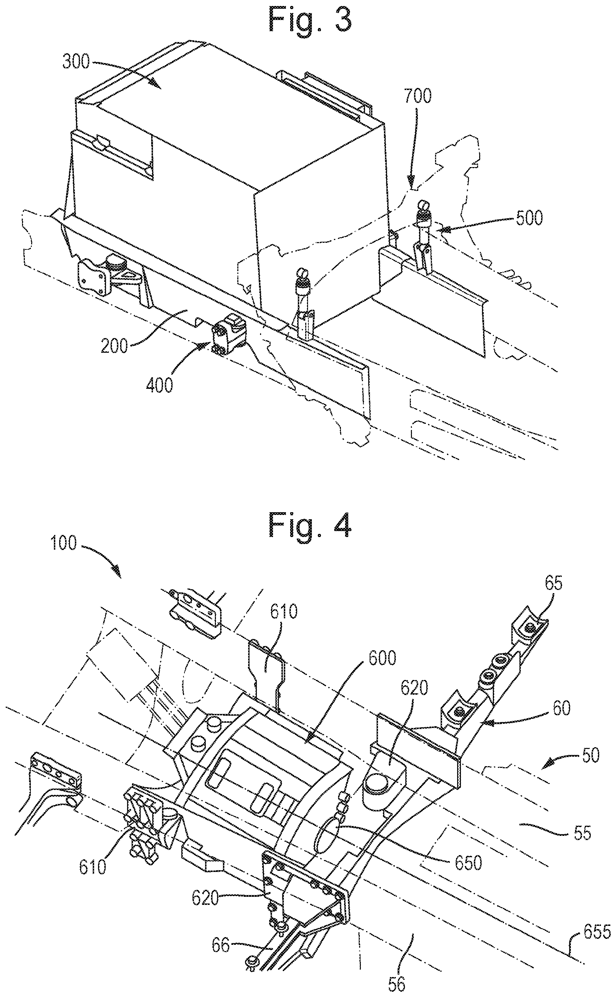

As a result of the cantilevered support of the mass of auxiliary unit 351, however, auxiliary frame 200 may be prone to make a pitch movement P, which can be defined as a rotation around a pitch axis parallel to front axis 11 as shown in FIG 1, said pitch axis e.g. formed between two opposing module mounts 400 on longitudinal chassis members 55 and 56. For this reason, rear section 220 comprises shock absorbers 500 arranged for absorbing pitch movement P of auxiliary frame 200 relative to chassis 50 behind module mounts 400. For example, shock absorbers 500 can be mounted between rear section 220 and chassis 50, e.g. one or both of longitudinal chassis beams 55, 56 or a chassis member, or shock absorbers 500 can be mounted between rear section 220 and another component which cannot make a similar pitch movement relative to chassis 50, e.g. a cabin suspension. FIG 1 illustrates shock absorbers 500 in a vertically upward orientation, however alternative orientations can be envisioned by the person skilled in the art, e.g. vertically downward or at another angle relative to auxiliary frame 200, dependent on the relative location of the mounting points. The shock absorbers are supported on the auxiliary frame on one side, and on another support on the other side. The other support for the shock absorber 500 could be directly mechanically connected to the chassis members 55,56, e.g. via a rear cabin suspension yoke that is mounted to the chassis members illustrated in FIG 3.

FIG 2 illustrates a side view of another or further embodiment of electric power module 100, further comprising an electric motor 600 to be mounted beyond rear section 220 of auxiliary frame 200 and arranged for driving rear wheels of the truck. As such, electric power module 100 and electric motor 600 form a combined power unit, e.g. arranged for converting a conventional truck to a truck driven by an electric power train. In preferred embodiments, electric power source unit 300 comprises a battery pack 310, to store electric energy for powering electric motor 600. Alternatively, electric power source unit 300 comprises one or multiple fuel cells, or a combination of battery packs and fuel cells.

Preferably, electric motor 600 is electrically coupled to electric power module 100. However, motor 600 is also preferably mechanically decoupled from the power module 100, in particular, its auxiliary frame 200, to avoid drive torque from electric motor 600 mechanically affecting electric power module 100, e.g. causing deformation of electric power module 100, or more specifically to avoid that auxiliary frame 200, needs to be designed more robust and thus heavier, to withstand the torque of the electric motor 600. For example, electric motor 600 is mechanically decoupled from electric power module 100 by having a separate frame for mounting to chassis 50, preferably at a distance from electric power module 100. Electric motor 600 is electrically coupled to electric power module 100, e.g. by high voltage power cables, preferably avoiding excessive stresses in cables and connectors due to relative movement between electric motor 600 and electric power module 100 under normal operating conditions.

As shown in FIG 2, some embodiments of electric power module 100 can have an auxiliary frame 200 comprising a bottom section 230 arranged for removably mounting further auxiliary units 360, 361 to auxiliary frame 200. Further auxiliary unit 361 can for example comprise a coolant system unit, for cooling electric power module 100 and/or electric motor 600 or an e-compressor that is serviceable from below. Alternatively, further auxiliary unit 360 and 361 may comprise other system units supporting or enhancing the functionality of electric power module 100. Because of their beneficial mounting on bottom section 230, further auxiliary units 360, 361 preferably comprise system units that require regular service, maintenance or inspection. In preferred embodiments of electric power module 100 and of trucks provided with drive power by such an electric power module, further auxiliary units 360, 361 can be removably mounted to auxiliary frame 200 from a bottom side of the truck, to facilitate service and maintenance to electric power module 100 and the corresponding truck.

FIG 3 illustrates an isometric top view of electric power module and its rear suspension. Shock absorbers 500 are provided between auxiliary frame 200 and another support that connects to the chassis members 55, 56. In the embodiment, the other support is formed by rear cabin suspension yoke 700 that is mounted to the chassis members illustrated in FIG 3. The suspension dampens tilting impact that arise due to the units arranged on the rear section of auxiliary frame with a center of mass beyond the rear module mount 400. These units may be mounted directly to the auxiliary frame, but may also be mounted rearward of power source unit 300. In this way, the auxiliary frame can be kept light while it extends considerably rearwards in comparison with a conventional combustion engine, and yet achieves the same mass benefits of the weight collected on the front axle.

Yet another or further embodiment of electric power module 100 is illustrated in FIG 4, in an isometric top view. Here, electric motor 600 comprises motor mounts 610, 620 for suspending electric motor 600 to chassis 50 between the pair of longitudinal chassis members 55, 56. In this way, electric motor 600 can mechanically be coupled to chassis 50 while the center of gravity of electric motor 600 can beneficially be placed close to electric power module 100 and in line with a drive shaft 650 to the driven rear wheels of the truck, such that electric motor 600 can be mounted into a chassis of a truck similar to a transmission unit in a conventional power train driven by an internal combustion engine.

As shown, centerline 655 of drive shaft 650 is suspended parallel to the pair of longitudinal chassis members 55, 56, such that electric motor is aligned parallel to longitudinal chassis members 55, 56. As a result, drive shaft 650 can be connected to a driven rear axle of a conventional truck, e.g. comprising a differential or other angular transmission.

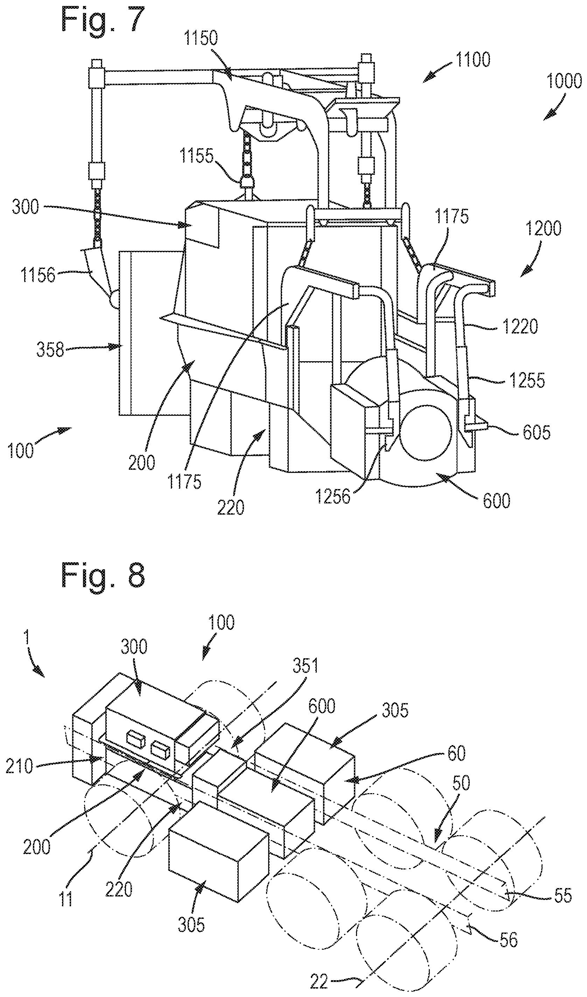

FIG 4 also illustrates other or further embodiments of electric power module 100 in which electric motor 600 is mounted to a chassis cross member 60. As shown, chassis cross member 60 extends laterally between and beyond the pair of longitudinal chassis members 55, 56 and comprises distal ends 65, 66 arranged for suspending auxiliary electrical power source units, which are indicated in FIG 8 with reference number 305. Back to FIG 4, chassis cross member 60 can be arranged at a rear end of electric motor 600, as presently illustrated, or at a front end of electric motor 600, or in between, depending on the position of motor mounts 610, 620 relative to the body of electric motor 600, and/or depending on the position of distal ends 65, 66 relative to the auxiliary power source units.

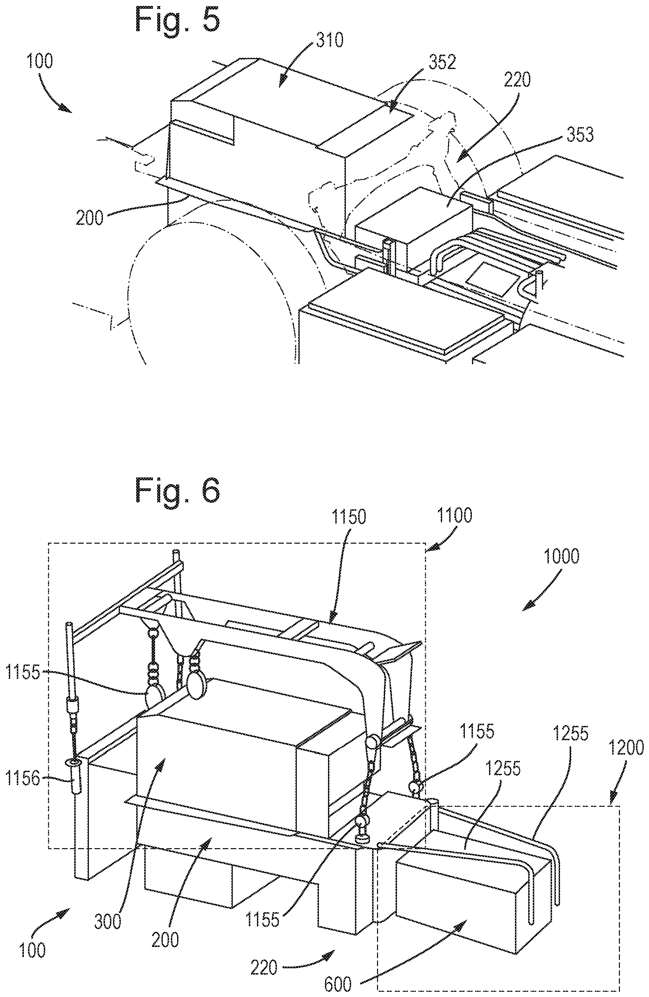

FIG 5 provides an isometric view of another or further embodiment of electric power module 100. Besides comprising an invertor as indicated in FIG 1, the at least one auxiliary unit, mounted at rear section 220 of auxiliary frame 200, comprises a power junction unit 352, e.g. to provide separate inputs and outputs for distribution of high voltage and/or low voltage power within electric power module 100. Other auxiliary units may comprise an electronic control unit, e.g. for controlling electric power module 100, and an on-board charger, e.g. for charging battery pack 310. Preferably, electrical wiring and cables are organized such that high voltage power lines, e.g. between electric motor 600 and power junction unit 352, are as short as possible and at a distance from data communication cables, to reduce the effects of electromagnetic radiation caused by the high voltage power lines.

FIG 5 also depicts the at least one auxiliary unit at rear section 220 comprising a fuse unit 353, according to another or further embodiment of electric power module 100. Fuse unit 353 can e.g. be a fuse box comprising one or multiple fuses arranged for electrically protecting electric power module 100, auxiliary units, further auxiliary units, other units and/or various sub-parts of these modules and units.

Preferably, fuse unit 353 is accessible from a top side of the truck, e.g. near a rear bottom edge of a cabin of the truck, or fuse unit 353 can be located below the cabin and accessible from a top side of the truck by tilting the cabin of the truck forward. Fuse unit 353 is arranged to be removably mounted to auxiliary frame 200 by a tilting movement of fuse unit 353, such that, in case of a truck with a fixed cargo bed, fuse unit 353 can be mounted and removed from a top side of the truck by making use of the clearance between the cabin and a cargo bed of the truck.

FIG 6 illustrates a hoisting apparatus 1000 for hoisting electric power module 100 according to any embodiment of the present invention comprising an electric motor, such as electric motor 600 as illustrated, into a chassis of a truck. Hoisting apparatus 1000 comprises a first hoisting section 1100 and a second hoisting section 1200.

First hoisting section 1100 comprises a frame yoke 1150 including frame brackets 1155. Frame brackets 1155 can e.g. comprise hooks, carbines, bolts, or any other temporary fastening means suitable for coupling to auxiliary frame 200 of electric power module 100 and carrying the combined mass of electric power module 100 and electric motor 600 in a secure fashion. First hoisting section 1100 can comprise one or more frame brackets 1155 arranged for coupling to auxiliary frame 200 directly or via an intermediate body providing a mount, such as a rod, plate or component arranged for transferring the load from auxiliary frame 200 to frame bracket 1155. For example, as shown in FIG 6 a central frame bracket 1155 of first hoisting section 1100 may be arranged for being coupled to a front side of electric power module 100, e.g. by an intermediate plate connected to auxiliary frame 200 at the front of electric power source unit 300. Additionally, first hoisting section can comprise additional frame brackets 1156 arranged for coupling to specific auxiliary units, such as cooling unit 358 shown in FIG 7, which may lack a structural connection to auxiliary frame strong enough to carry their own weight when electric power module 100 is hoisted as a combined power module into a chassis of a truck. Second hoisting section 1200 comprises motor hoisting brackets 1255 arranged for coupling electric motor 600 to auxiliary frame 200, preferably to rear section 220 of auxiliary frame 200, more preferably near a reinforced part of rear section 220. First hoisting section 1100 is arranged for hoisting second hoisting section 1200. In this way electric power module 100 and electric motor 600 can be hoisted as a combined power unit into a chassis of a truck.

FIG 7 illustrates another or further embodiment of hoisting apparatus 1000. First hoisting section 1100 comprises a frame yoke 1150 including frame brackets 1155. As shown, a central frame bracket 1155 is coupled to a front side of electric power module 100, e.g. by an intermediate plate connected to auxiliary frame 200 having a mount for coupling to central frame bracket 1155. Cooling unit 358 may only be coupled to electric power module 100 by means of coolant hoses and power cables of a certain length, for which reason it may be preferred that cooling unit 358 is hoisted together with electric power module 100 as a combined unit, yet cooling unit 358 can still be mounted and/or suspended independently from auxiliary frame 200 onto the chassis of the truck.

As shown in FIG 7, first hoisting section 1100 comprises rear frame brackets 1175 arranged for coupling to rear section 220 of auxiliary frame 200 while forming a support structure for hoisting electric motor 600 as part of second hoisting section 1200. Rear frame brackets 1175 can for example be an L-shaped plate, having a short side coupled to rear section 220 of auxiliary frame 200 and a long side extending from rear section 220 of auxiliary frame over electric motor 600, parallel to the centerline of electric motor 600.

Second hoisting section 1200 for example can comprise frame rods 1220 extending from rear frame brackets 1175 toward electric motor 600, and arranged to control the distance between electric power module 100 and electric motor 600 when hoisted as a combined unit into a chassis of a truck. Different variants of frame rods 1220 can be chosen, e.g. having specific dimensions, handles and/or adjustment means, to accommodate different types of electric motors and control their corresponding distance to electric power module 100.

FIG 7 further shows that motor hoisting brackets 1255 can be arranged for coupling electric motor 600 to auxiliary frame 200, e.g. by having motor brackets 1255 connected to a distal end of frame rods 1220. For example, each motor hoisting bracket 1255 has a locking element 1256 arranged for engaging with a motor mount 605 of electric motor 600. The locking element 1256 may comprise safety clamp mechanism, e.g. a hook engaging into a cavity on a bottom surface of motor mount 605, such that the locking element of motor bracket 1255 is aligned with motor mount 605 and a catch arranged for locking the hook into the cavity of motor mount 605, such that the motor mount 605 is prevented from disengaging with the protrusion of motor bracket 1255. The locking element can for example be a (spring) preloaded element, a fastener element, or a wedge element.

FIG 8 illustrates a truck 1, provided with drive power by the electric power module 100 according to any of the embodiments claimed in the present invention. In the exemplary embodiment shown, electric power module 100 comprises an auxiliary frame 200 mounted to chassis 50 of truck 1, having a pair of longitudinal chassis members 55, 56 extending between front axle 11 and rear axle 22.

An electric power source unit 300 is mounted to front section 210 of auxiliary frame 200, while rear section 220 of auxiliary frame 200 comprises a power electronics unit 351. Front section 210 of auxiliary frame 200 comprises module mounts arranged for suspending electric power module 100 to chassis 50 between the pair of longitudinal chassis members 55, 56 near front axle 11 of truck 1.

The electric power module 100 in truck 1 is further equipped with an electric motor 600 arranged for driving rear wheels of truck 1. Electric motor 600 is mounted beyond rear section 220 of auxiliary frame 200 and between the pair of longitudinal chassis members 55, 56 to chassis cross member 60, which is arranged for suspending auxiliary electrical power source units 305, to enhance the power capacity and/or range of truck 1.

It is thus believed that the operation and construction of the present invention will be apparent from the foregoing description and drawings appended thereto. The subject matter for which protection is sought is defined by the appended claims. For the purpose of clarity and a concise description features are described herein as part of the same or separate embodiments, however, it will be appreciated that the scope of the invention may include embodiments having combinations of all or some of the features described. The invention applies not only to automotive applications where the e-motor is used for traction power, but also to other industrial applications where an electric motor is used. It will be clear to the skilled person that the invention is not limited to any embodiment herein described and that modifications are possible which may be considered within the scope of the appended claims. Also, kinematic inversions are considered inherently disclosed and can be within the scope of the invention. In the claims, any reference signs shall not be construed as limiting the claim. Furthermore, the words 'a' and 'an' shall not be construed as limited to 'only one', but instead are used to mean 'at least one', and do not exclude a plurality. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention.

## Claims

1. An electric power module (100) for providing drive power in a truck, comprising an auxiliary frame (200) to be mounted to a chassis (50) having a pair of longitudinal chassis members (55, 56) extending between a front axle (11) and a rear axle (22) of the truck, said auxiliary frame (200) comprising a front section (210) arranged for mounting an electric power source unit (300) and a rear section (220) arranged for mounting at least one auxiliary unit (351);
wherein the front section (210) of the auxiliary frame comprises module mounts (400) arranged for suspending the electric power module (100) to the chassis (50) between the pair of longitudinal chassis members (55, 56) near the front axle (11) of the truck;
**characterized in that** the rear section (220) of the auxiliary frame extends beyond the front section (210) in a cantilevered fashion and comprises shock absorbers (500) arranged for absorbing a pitch movement (P) of the auxiliary frame (200) relative to the chassis (50) behind the module mounts (400).

2. The electric power module (100) according to claim 1, wherein the shock absorbers (500) are arranged relative to the chassis (50) by a mechanical connection to a yoke (700) that is provided to the longitudinal chassis members (55, 56).

3. The electric power module (100) according to claim 1, further comprising an electric motor (600) to be mounted beyond the rear section (220) of the auxiliary frame and arranged for driving rear wheels of the truck.

4. The electric power module (100) according to claim 3, wherein the electric motor (600) is electrically coupled to and mechanically decoupled from the electric power module (100).

5. The electric power module (100) according to claim 3 or 4, wherein the electric motor (600) comprises motor mounts (610, 620) for suspending the electric motor (600) to the chassis (50) between the pair of longitudinal chassis members (55, 56).

6. The electric power module (100) according to any of claims 2-5, wherein a centerline (655) of a drive shaft (650) of the electric motor is suspended parallel to the pair of longitudinal chassis members (55, 56).

7. The electric power module (100) according to any of claims 2-6, wherein the electric motor (600) is mounted between the pair of longitudinal chassis members (55, 56) to a chassis cross member (60), wherein the chassis cross member (60) laterally extends between and beyond the pair of longitudinal chassis members (55, 56) and comprises distal ends (65, 66) arranged for suspending auxiliary electric power source units.

8. The electric power module (100) according to any preceding claim, wherein the at least one auxiliary unit (351) comprises a power junction unit (352).

9. The electric power module (100) according to any preceding claim, wherein the at least one auxiliary unit (351) comprises a fuse unit (353).

10. The electric power module (100) according to claim 9, wherein the fuse unit (353) is accessible from a top side of the truck, and wherein the fuse unit can be removably mounted to the auxiliary frame (200) by a tilting movement of the fuse unit.

11. The electric power module (100) according to any preceding claim, wherein the auxiliary frame (200) comprises a bottom section (230) arranged for removably mounting at least one further auxiliary unit (360, 361) to the auxiliary frame (200).

12. The electric power module according to claim 10, wherein the at least one further auxiliary unit (360, 361) can be removably mounted to the auxiliary frame (200) from a bottom side of the truck.

13. The electric power module (100) according to any preceding claim, wherein the at least one further auxiliary unit (360, 361) comprises a coolant system unit.

14. The electric power module (100) according to any preceding claim, wherein the electric power source unit (300) comprises a battery pack (310).

15. A hoisting apparatus (1000) configured for hoisting the electric power module (100) according to any of claims 2 - 14 into a chassis (50) of a truck, wherein the hoisting apparatus (1000) comprises
- a first hoisting section (1100), comprising a frame yoke (1150) including frame brackets (1155) arranged for coupling to the auxiliary frame (200) of the electric power module; and
- a second hoisting section (1200), comprising motor brackets (1255) arranged for coupling the electric motor (600) to the auxiliary frame (200);
wherein the first hoisting section (1100) is arranged for hoisting the second hoisting section (1200).

16. A truck (1), provided with drive power by the electric power module (100) according to any of claims 1 - 14.

## Patentansprüche

1. Elektrisches Leistungsmodul (100), zum Bereitstellen von Antriebsleistung in einem Lastkraftwagen, mit einem Hilfsrahmen (200) zur Montage an einem Fahrgestell (50), das ein Paar von Fahrgestell-Längselementen (55, 56) aufweist, die sich zwischen der Vorderachse (11) und einer Hinterachse (22) des Lastkraftwagens erstrecken, wobei der Hilfsrahmen (200) einen vorderen Abschnitt (210) zur Montage einer elektrischen Leistungsquelleneinheit (300) eingerichtet, und einen hinteren Abschnitt (220) zur Montage mindestens einer Hilfseinheit (351) eingerichtet, aufweist;
wobei der vordere Abschnitt (210) des Hilfsrahmens Modulhalterungen (400) aufweist, die dazu eingerichtet sind, das elektrische Leistungsmodul (100) an dem Fahrgestell (50) zwischen dem Paar von Fahrgestell-Längselementen (55, 56) nahe der Vorderachse (11) des Lastkraftwagens aufzuhängen;
**dadurch gekennzeichnet, dass** sich der hintere Abschnitt (220) über den ersten Abschnitt (210) hinaus in einer auskragenden Art erstreckt und Stoßdämpfer (500) aufweist, die zum Absorbieren einer Nickbewegung (P) des Hilfsrahmens (200) relativ zu dem Fahrgestell (50) hinter den Modulhalterungen (400) eingerichtet sind.

2. Elektrisches Leistungsmodul (100) nach Anspruch 1, wobei die Stoßdämpfer (500) relativ zu dem Fahrgestell (50) durch eine mechanische Verbindung an einem Joch (700), das an den Fahrgestell-Längselementen (55, 56) bereitgestellt ist, eingerichtet sind.

3. Elektrisches Leistungsmodul (100) nach Anspruch 1, das weiter einen Elektromotor (600) aufweist, der über den hinteren Abschnitt (220) des Hilfsrahmens hinaus angebaut werden soll und dazu eingerichtet ist, die Hinterräder des Lastkraftwagens anzutreiben.

4. Elektrisches Leistungsmodul (100) nach Anspruch 3, wobei der Elektromotor (600) mit dem elektrischen Leistungsmodul (100) elektrisch gekoppelt und mechanisch entkoppelt ist.

5. Elektrisches Leistungsmodul (100) nach Anspruch 3 oder 4, wobei der Elektromotor (600) Motorhalterungen (610, 620) zum Aufhängen des Elektromotors (600) an dem Fahrgestell (50) zwischen dem Paar von Fahrgestell-Längselementen (55, 56) aufweist.

6. Elektrisches Leistungsmodul (100) nach einem der Ansprüche 2 bis 5, wobei die Mittellinie (655) einer Antriebswelle (650) des Elektromotors parallel zu dem Paar von Fahrgestell-Längselementen (55, 56) aufgehängt ist.

7. Elektrisches Leistungsmodul (100) nach einem der Ansprüche 2 bis 6, wobei der Elektromotor (600) zwischen dem Paar von Fahrgestell-Längselementen (55, 56) an ein Fahrgestell-Querelement (60) angebaut ist, wobei sich das Fahrgestell-Querelement (60) seitlich zwischen dem Paar von Fahrgestell-Längselementen (55, 56) und darüber hinaus erstreckt und distale Enden (65, 66) aufweist, die zum Aufhängen elektrischer Hilfsleistungsquelleneinheiten eingerichtet sind.

8. Elektrisches Leistungsmodul (100) nach einem vorstehenden Anspruch, wobei die mindestens eine Hilfseinheit (351) eine Leistungsverbindungseinheit (352) aufweist.

9. Elektrisches Leistungsmodul (100) nach einem vorstehenden Anspruch, wobei die mindestens eine Hilfseinheit (351) eine Sicherungseinheit (353) aufweist.

10. Elektrisches Leistungsmodul (100) nach Anspruch 9, wobei die Sicherungseinheit (353) von einer Oberseite des Lastkraftwagens her zugänglich ist, und wobei die Sicherungseinheit abnehmbar an den Hilfsrahmen (200) durch eine Kippbewegung der Sicherungseinheit angebaut werden kann.

11. Elektrisches Leistungsmodul (100) nach einem vorstehenden Anspruch, wobei der Hilfsrahmen (200) einen Bodenabschnitt (230) aufweist, der dazu eingerichtet ist, abnehmbar mindestens eine weitere Hilfseinheit (360, 361) an dem Hilfsrahmen (200) anzubauen.

12. Elektrisches Leistungsmodul nach Anspruch 10, wobei die mindestens eine weitere Hilfseinheit (360, 361) von einer Bodenseite des Lastkraftwagens her an den Hilfsrahmen (200) abnehmbar angebaut werden kann.

13. Elektrisches Leistungsmodul (100) nach einem vorstehenden Anspruch, wobei die mindestens eine weitere Hilfseinheit (360, 361) eine Kühlmittelsystemeinheit aufweist.

14. Elektrisches Leistungsmodul (100) nach einem vorstehenden Anspruch, wobei die elektrische Leistungsquelleneinheit (300) ein Batteriepack (310) aufweist.

15. Hebegerät (1000), das zum Heben des elektrischen Leistungsmoduls (100) nach einem der Ansprüche 2 bis 14 in ein Fahrgestell (50) eines Lastkraftwagens konfiguriert ist, wobei das Hebegerät (1000) Folgendes aufweist
- einen ersten Hebeabschnitt (1100), der ein Rahmenjoch (1150) aufweist, das Rahmenhalter (1155) beinhaltet, die zum Koppeln des Hilfsrahmens (200) des elektrischen Leistungsmoduls eingerichtet sind; und
- einen zweiten Hebeabschnitt (1200), der Motorhalter (1255) aufweist, die dazu eingerichtet sind, den Elektromotor (600) an den Hilfsrahmen (200) zu koppeln;
wobei der erste Hebeabschnitt (1100) zum Heben des zweiten Hebeabschnitts (1200) eingerichtet ist.

16. Lastkraftwagen (1), der mit Antriebsleistung durch das elektrische Leistungsmodul (100) nach einem der Ansprüche 1 bis 14 versehen ist.

## Revendications

1. Module d'alimentation électrique (100) pour fournir une puissance d'entraînement dans un camion, comprenant un châssis auxiliaire (200) à monter sur un châssis (50) présentant une paire d'éléments de châssis longitudinaux (55, 56) s'étendant entre un essieu avant (11) et un essieu arrière (22) du camion, ledit châssis auxiliaire (200) comprenant une section avant (210) agencée pour monter une unité de source d'alimentation électrique (300) et une section arrière (220) agencée pour monter au moins une unité auxiliaire (351) ;
dans lequel la section avant (210) du châssis auxiliaire comprend des montures de module (400) agencés pour suspendre le module d'alimentation électrique (100) au châssis (50) entre la paire d'éléments de châssis longitudinaux (55, 56) à proximité de l'essieu avant (11) du camion ;
**caractérisé en ce que** la section arrière (220) du châssis auxiliaire s'étend au-delà de la section avant (210) en porte-à-faux et comprend des amortisseurs (500) agencés pour absorber un mouvement de tangage (P) du châssis auxiliaire (200) par rapport au châssis (50) derrière les montures de module (400).

2. Module d'alimentation électrique (100) selon la revendication 1, dans lequel les amortisseurs (500) sont agencés par rapport au châssis (50) par une connexion mécanique à une fourche (700) qui est fournie aux éléments de châssis longitudinaux (55, 56).

3. Module d'alimentation électrique (100) selon la revendication 1, comprenant en outre un moteur électrique (600) destiné à être monté au-delà de la section arrière (220) du châssis auxiliaire et agencé pour entraîner des roues arrière du camion.

4. Module d'alimentation électrique (100) selon la revendication 3, dans lequel le moteur électrique (600) est couplé électriquement au module d'alimentation électrique (100), et découplé mécaniquement de celui-ci.

5. Module d'alimentation électrique (100) selon la revendication 3 ou 4, dans lequel le moteur électrique (600) comprend des supports de moteur (610, 620) pour suspendre le moteur électrique (600) au châssis (50) entre la paire d'éléments de châssis longitudinaux (55, 56).

6. Module d'alimentation électrique (100) selon l'une quelconque des revendications 2 à 5, dans lequel une ligne centrale (655) d'un arbre d'entraînement (650) du moteur électrique est suspendue parallèlement à la paire d'éléments de châssis longitudinaux (55, 56).

7. Module d'alimentation électrique (100) selon l'une quelconque des revendications 2 à 6, dans lequel le moteur électrique (600) est monté entre la paire d'éléments de châssis longitudinaux (55, 56) sur un élément transversal de châssis (60), dans lequel l'élément transversal de châssis (60) s'étend latéralement entre et au-delà de la paire d'éléments de châssis longitudinaux (55, 56) et comprend des extrémités distales (65, 66) agencées pour suspendre des unités de source d'alimentation électrique auxiliaire.

8. Module d'alimentation électrique (100) selon l'une quelconque des revendications précédentes, dans lequel la au moins une unité auxiliaire (351) comprend une unité de jonction d'alimentation (352).

9. Module d'alimentation électrique (100) selon l'une quelconque des revendications précédentes, dans lequel la au moins une unité auxiliaire (351) comprend une unité de fusible (353).

10. Module d'alimentation électrique (100) selon la revendication 9, dans lequel l'unité de fusible (353) est accessible depuis un côté supérieur du camion, et dans lequel l'unité de fusible peut être montée de manière amovible sur le châssis auxiliaire (200) par un mouvement de basculement de l'unité de fusible.

11. Module d'alimentation électrique (100) selon l'une quelconque des revendications précédentes, dans lequel le châssis auxiliaire (200) comprend une section inférieure (230) agencée pour monter de manière amovible au moins une unité auxiliaire supplémentaire (360, 361) sur le châssis auxiliaire (200).

12. Module d'alimentation électrique selon la revendication 10, dans lequel la au moins une unité auxiliaire supplémentaire (360, 361) peut être montée de manière amovible sur le châssis auxiliaire (200) à partir d'un côté inférieur du camion.

13. Module d'alimentation électrique (100) selon l'une quelconque des revendications précédentes, dans lequel la au moins une unité auxiliaire supplémentaire (360, 361) comprend une unité de système de refroidissement.

14. Module d'alimentation électrique (100) selon l'une quelconque des revendications précédentes, dans lequel l'unité de source d'alimentation électrique (300) comprend un bloc-batterie (310).

15. Appareil de levage (1000) configuré pour lever le module d'alimentation électrique (100) selon l'une quelconque des revendications 2 à 14 dans un châssis (50) d'un camion, dans lequel l'appareil de levage (1000) comprend
- une première section de levage (1100), comprenant une fourche de châssis (1150) incluant des étriers de châssis (1155) agencés pour être couplés au châssis auxiliaire (200) du module d'alimentation électrique ; et
- une seconde section de levage (1200), comprenant des étriers de moteur (1255) agencés pour coupler le moteur électrique (600) au châssis auxiliaire (200) ;
- dans lequel la première section de levage (1100) est agencée pour lever la seconde section de levage (1200).

16. Camion (1), pourvu d'une puissance d'entraînement par le module d'alimentation électrique (100) selon l'une quelconque des revendications 1 à 14.
